(19) Europäisches Patentamt
European Patent Office
Office européen des brevets

(11) **EP 3 592 987 B1**

(12) **EUROPÄISCHE PATENTSCHRIFT**

(45) Veröffentlichungstag und Bekanntmachung des Hinweises auf die Patenterteilung:
**04.05.2022  Patentblatt 2022/18**

(21) Anmeldenummer: **18781996.6**

(22) Anmeldetag: **25.09.2018**

(51) Internationale Patentklassifikation (IPC):
*F04D 29/42* *(2006.01)*    *B60H 1/00* *(2006.01)*
*F04D 29/70* *(2006.01)*

(52) Gemeinsame Patentklassifikation (CPC):
**F04D 29/4226; F04D 29/703; B60H 1/00371;**
B60H 1/00471; B60H 2001/00235

(86) Internationale Anmeldenummer:
**PCT/EP2018/075938**

(87) Internationale Veröffentlichungsnummer:
**WO 2019/068514 (11.04.2019 Gazette 2019/15)**

(54) **HALBSPIRALGEHÄUSE**

HALF-SPIRAL HOUSING

CARTER SEMI-HÉLICOÏDAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.10.2017  DE 102017122987**

(43) Veröffentlichungstag der Anmeldung:
**15.01.2020  Patentblatt 2020/03**

(73) Patentinhaber: **ebm-papst Mulfingen GmbH & Co. KG**
**74673 Mulfingen (DE)**

(72) Erfinder:
• **RATHGEB, Josef**
  **73489 Jagstzell (DE)**
• **HAAF, Oliver**
  **74635 Kupferzell (DE)**

(74) Vertreter: **Staeger & Sperling**
**Partnerschaftsgesellschaft mbB**
**Sonnenstraße 19**
**80331 München (DE)**

(56) Entgegenhaltungen:
WO-A1-2017/071880     DE-A1-102009 031 552
DE-A1-102009 033 776  DE-A1-102014 224 657
US-A- 3 846 040       US-A1- 2007 197 156

• **DATABASE WPI Week 201735 Thomson Scientific, London, GB; AN 2017-313563 XP002786601, -& CN 106 627 040 A (SHENZHEN WHS TECHNOLOGY CO LTD) 10. Mai 2017 (2017-05-10)**

**Beschreibung**

Die Erfindung betrifft ein Halbspiralgehäuse eines Radialventilators.

Halbspiralgehäuse von Radialventilatoren sind aus dem Stand der Technik bekannt und werden beispielsweise bei Aufdachklimaanlagen von Omnibussen eingesetzt. Dabei erstrecken sich die Halbspiralgehäuse in Umfangsrichtung über 180° einer logarithmischen Spirale und sind als Teil des Radialventilators in der Verdampfereinheit integriert. Die Luft wird axial über eine Ansaugöffnung angesaugt und nach Durchlaufen des Druckraums radial ausgeblasen. Im Stand der Technik werden spiralförmige Druckräume mit logarithmischem Spiralradius eingesetzt. Der logarithmische Spiralradius ist mathematisch durch die Größe des Druckraums festgelegt und führt deshalb zu einer vorbestimmten Bauhöhe des Halbspiralgehäuses.

Da die Bauhöhe an Einsatzorten wie Aufdachklimaanlagen sehr beschränkt ist, liegt der Erfindung die Aufgabe zugrunde, ein Halbspiralgehäuse mit reduziertem Bauraumbedarf bereit zu stellen. Zudem soll vorsehbar sein, dass sich das Halbspiralgehäuse bezüglich der Effizienz und Geräuschbildung des Radialventilators nicht oder nur geringfügig negativ auswirkt.

Stand der Technik im vorliegenden technischen Gebiet ist beispielsweise offenbart in den Druckschriften CN 106 627 040 A, DE 10 2009 033 776 A1, DE 10 2009 031 552 A1 und WO 2017/071880 A1.

Diese Aufgabe wird durch die Merkmalskombination gemäß dem beigefügten Anspruch 1 gelöst.

Erfindungsgemäß wird ein Halbspiralgehäuse eines Radialventilators mit einem sich in Umfangsrichtung um eine axiale Ansaugöffnung zu einer radialen Ausblasöffnung erstreckenden, spiralförmigen Druckraum vorgeschlagen, der in Umfangsrichtung gesehen zumindest in einen Anfangsabschnitt, einen Mittelabschnitt und einen Ausblasabschnitt unterteilt ist. Die Ansaugöffnung bestimmt eine zentrale Rotationsachse für ein Ventilatorrad und das Zentrum der Spirale. Die Erfindung zeichnet sich insbesondere dadurch aus, dass ein gemittelter Halbspiralgehäuseradius, um die Rotationsachse gesehen, im Anfangsabschnitt, Mittelabschnitt und Ausblasabschnitt variiert und im Ausblasabschnitt sein Maximum aufweist, wobei der Halbspiralgehäuseradius im Mittelabschnitt in einem eine Maximalhöhe des Halbspiralgehäuses bestimmenden Bereich gegenüber einem logarithmischen Spiralradius verkleinert ist. Die Form der logarithmischen Spirale wird über den logarithmischen Spiralradius in Abhängigkeit vom Umfangswinkel um die Rotationsachse bestimmt, wobei ihre Erstreckung bzw. ihr Verlauf mathematisch festgelegt ist. Der Steigungswinkel kann dabei variabel und bedarfsgerecht festgelegt werden.

Dies hat zur Folge, dass die Maximalhöhe des Halbspiralgehäuses gegenüber einem Halbspiralgehäuse mit einem Halbspiralgehäuseradius, der dem logarithmischen Spiralradius entspricht, in Umfangsrichtung gesehen in dem die Maximalhöhe des Halbspiralgehäuses bestimmenden Bereich des Mittelabschnitts lokal reduziert ist. Das erfindungsgemäße Halbspiralgehäuse baut mithin kompakter und kann beispielsweise auch in einem regelmäßigen Einsatzort abgerundeter Randbereiche der Verdampfereinheiten von Aufdachklimaanlagen von Omnibussen integriert werden.

In einer bezüglich Effizienz und Geräuschbildung vorteilhaften Ausführung des Halbspiralgehäuses ist vorgesehen, dass das Halbspiralgehäuse eine Axialverbreiterung des Druckraums zumindest im Mittelabschnitt aufweist. Die Axialverbreiterung vergrößert eine Strömungsquerschnittsfläche des Druckraums um einen Wert, der zumindest dem Wert entspricht, um den die Strömungsquerschnittsfläche des Druckraums durch die Verkleinerung des Mittelabschnitts gegenüber dem logarithmischen Spiralradius reduziert ist. Somit sind die Einbußen des Strömungsquerschnitts durch eine radiale Bauraumverringerung durch eine axiale Verbreiterung egalisiert. Ferner wird dadurch erreicht, dass die Druckumwandlung von dynamischem Druck in statischen Druck innerhalb des spiralförmigen Druckraums über den Umfang kontinuierlich aufrecht erhalten wird. Dies begünstigt eine hohe Effizienz des das Halbspiralgehäuse umfassenden Radialventilators.

In einer vorteilhaften Ausführungsvariante des Halbspiralgehäuses entspricht der Halbspiralgehäuseradius zumindest an einem Übergang in Umfangsrichtung zwischen dem Anfangsabschnitt und dem Mittelabschnitt sowie dem Mittelabschnitt und dem Ausblasabschnitt dem logarithmischen Spiralradius. Zudem weisen in einer Weiterbildung des Halbspiralgehäuses der Anfangsabschnitt und der Ausblasabschnitt eine Erstreckung in Umfangsrichtung entlang dem logarithmischen Spiralradius auf. Das bedeutet, dass ausschließlich im Mittelabschnitt des Druckraums die Geometrie des Halbspiralgehäuses gegenüber einer dem logarithmischen Spiralradius entsprechenden Spiralform in der oben beschriebenen Weise angepasst ist. In Umfangsrichtung gesehen verlaufen die übrigen Abschnitte entsprechend dem logarithmischen Spiralradius.

Als Ausführungsbeispiel umfasst die Erfindung zudem ein Halbspiralgehäuse, dessen Halbspiralgehäuseradius sich im Mittelabschnitt des Druckraums in eine axiale Richtung verringert. Beispielsweise kann eine axiale Hälfte des Halbspiralgehäuses hierzu eine geringere Radialerstreckung aufweisen als die andere axiale Hälfte des Halbspiralgehäuses.

Erfindungsgemäß ist vorgesehen, dass sich eine Radialerstreckung des Druckraums in dem die Maximalhöhe des Halbspiralgehäuses bestimmenden Bereich des Mittelabschnitts von einer ersten Axialseite des Halbspiralgehäuses zu einer gegenüberliegenden zweiten Axialseite des Halbspiralgehäuses verkleinert. Dabei verläuft bevorzugt eine radiale Druckraumwand, d.h. die die Axialseiten des Halbspiralgehäuses verbindende Druckraumwand, in einem Winkelbereich von $\delta=1°-20°$, weiter bevorzugt in einem Winkelbereich von $\delta=3°-12°$, geneigt gegenüber der Rotationsachse bzw. gegenüber einer zur Rotationsachse parallel verlaufenden Axialebene. Die Neigung bedingt einen Druckraumverlauf, der in einer radialen Schnittansicht von der einen zur anderen Axialseite des Halbspiralgehäuses auf die Rotationsachse zuläuft, so dass sich die Radialerstreckung des Druckraums in Axialrichtung über die gesamte axiale Breite verringert. Der radial äußerste Bereich des Druckraums im Mittelabschnitt weist damit im Radialschnitt gesehen eine im Wesentlichen dreieckige Form auf, wobei die Ecken gerundet sein können.

Als strömungstechnisch vorteilhafte Ausführung des Halbspiralgehäuses hat sich erwiesen, wenn sich in Umfangsrichtung gesehen der Anfangsabschnitt in Umfangsrichtung um die Rotationsachse über einen Winkelbereich von $\alpha=20°-110°$, weiter bevorzugt über einen Winkelbereich von $\alpha=40°-75°$, und der Mittelabschnitt über einen Winkelbereich von $\beta=30°-200°$, weiter bevorzugt über einen Winkelbereich von $\beta=120°-160°$ um die Rotationsachse erstrecken.

Ferner ist eine Ausführung strömungstechnisch vorteilhaft, bei der das Halbspiralgehäuse dadurch gekennzeichnet ist, dass die in Umfangsrichtung gesehenen Übergänge zwischen dem Anfangsabschnitt und dem Mittelabschnitt sowie dem Mittelabschnitt und dem Ausblasabschnitt tangential verlaufen.

In einer Weiterbildung ist das Halbspiralgehäuse aus zwei axialen Seitenteilen gebildet. Die gedachte axiale Trennlinie kann dabei axial mittig durch das Halbspiralgehäuse verlaufen. Die Gestaltungsfreiheit zur Anpassung der Druckraumgeometrie ist bei einer zweiteiligen Ausführung erheblich größer.

In einer Ausführung ist beispielsweise vorgesehen, dass eines der zwei Seitenteile im Mittelabschnitt in eine Axialrichtung gegenüber dem logarithmischen Spiralradius stärker verkleinert ist als das zweite Seitenteil.

Ferner wird bei einer weiteren Ausführungsvariante des Halbspiralgehäuses vorgesehen, dass die Ansaugöffnung eine sich parallel zur Rotationsachse erstreckende Einlaufdüse aufweist, deren Strömungsquerschnitt sich über ihren Axialverlauf verringert. An die Ansaugöffnung und die Einlaufdüse schließt sich im Mittelabschnitt in radialer Richtung unmittelbar die Verjüngung des Druckraums durch den lokal gegenüber dem logarithmischen Spiralradius verkleinerten Halbspiralgehäuseradius an.

Als strömungstechnisch vorteilhaft hat sich ferner ein Halbspiralgehäuse erwiesen, dessen Strömungsquerschnittsfläche im Anfangsabschnitt und Ausblasabschnitt des Druckraums oval, elliptisch, rechteckig oder rechteckig mit verrundeten Ecken ausgebildet ist.

Des Weiteren ist eine Ausführung günstig, bei der eine Ausblasfläche des Halbspiralgehäuses durch den Ausblasabschnitt gebildet wird und rechteckig oder rechteckig mit verrundeten Ecken geformt ist.

Eine Weiterbildung des Halbspiralgehäuses sieht zudem vor, dass an der Ansaugöffnung oder der Einlaufdüse ein konvex geformtes Vorleitgitter angeordnet ist. Das Vorleitgitter beeinflusst die Zuströmung und leitet die angesaugte Luftströmung mit seinen Gitterstegen vorbestimmt in die Einlaufdüse und Ansaugöffnung hinein, so dass Zusatzgeräusche durch eine gestörte Zuströmung, beispielsweise durch eine asymmetrische Ansaugsituation, vermieden werden.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Fig. 1     eine perspektivische Ansicht eines Ausführungsbeispiels eines erfindungsgemäßen Halbspiralgehäuses;

Fig. 2     eine erste Seitenansicht des Halbspiralgehäuses aus Fig. 1;

Fig. 3     eine Schnittansicht A-A des Halbspiralgehäuses aus Fig. 2;

Fig. 4     eine Schnittansicht C-C des Halbspiralgehäuses aus Fig. 2;

Fig. 5     eine Einbausituation des Halbspiralgehäuses aus Fig. 1.

Gleiche Bezugzeichen benennen gleiche Teile in allen Ansichten.

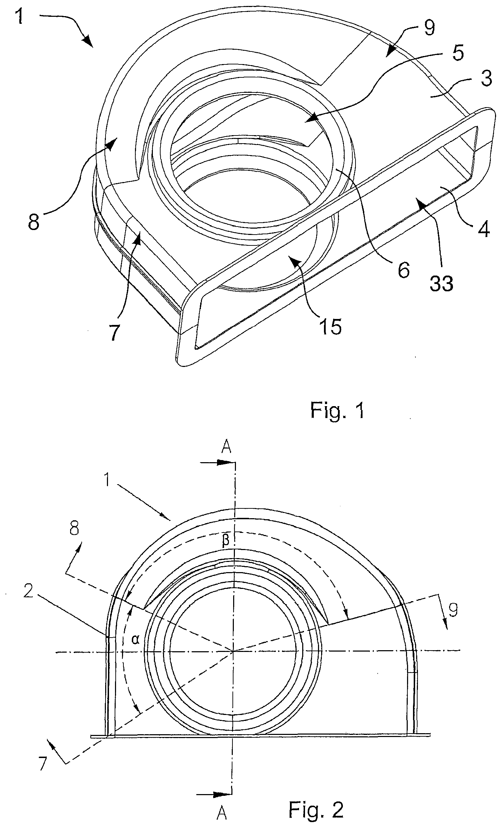

Die Figuren 1 - 4 zeigen ein Halbspiralgehäuse 1 für einen Radialventilator in einer perspektivischen Ansicht einer Seitenansicht und zwei Schnittansichten A-A und C-C. Das Halbspiralgehäuse 1 ist aus zwei Seitenteilen 3, 4 zusammengesetzt und umfasst eine axiale Ansaugöffnung 5 am Seitenteil 3, über die Luft axial angesaugt und radial über die im Wesentlichen rechteckige Ausblasfläche 10 ausgeblasen wird. Auf der gegenüberliegenden Axialseite ist eine Öffnung 15 zur Motoranordnung am Seitenteil 4 ausgebildet. Die Ansaugöffnung 5 hat in ihrem Zentrum die Rotationsachse 11 für ein in dem Halbspiralgehäuse 1 im Betrieb rotierendes Ventilatorrad (nicht gezeigt). Das Halbspiralgehäuse 1 bildet im Inneren einen sich um die Ansaugöffnung 5 erstreckenden Druckraum, im dem der dynamische Druck in statischen Druck umgewandelt wird. Der Druckraum ist in Umfangsrichtung gesehen in einen Anfangsabschnitt 7, einen Mittelabschnitt 8 und einen Ausblasabschnitt 9 unterteilt.

Der Anfangsabschnitt 7 erstreckt sich in Umfangsrichtung um die Rotationsachse 11 über den Winkel $\alpha =$

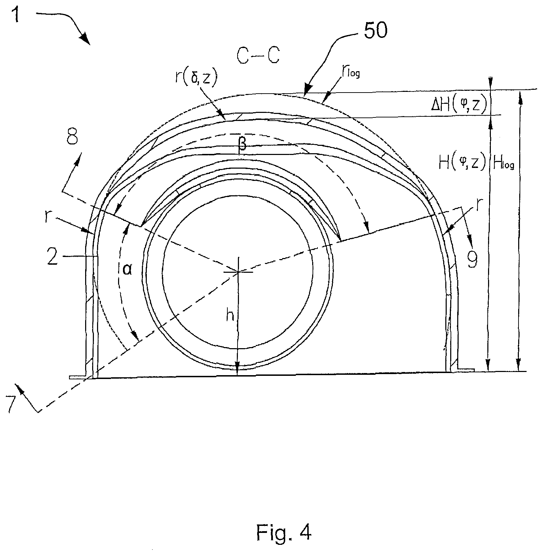

60°entlang dem logarithmischen Spiralradius $r_{log}$ und geht tangential in den sich über einen Winkel von $\beta = 140°$ um die Rotationsachse 11 verlaufenden Mittelabschnitt 8 über, wie insbesondere in Fig. 2 und 4 gezeigt. Der Ausblasabschnitt 9 erstreckt sich über den verbleibenden Winkelbereich bis zur Ausblasfläche 10 und verläuft wie der Anfangsabschnitt 7 entlang dem logarithmischen Spiralradius $r_{log}$.

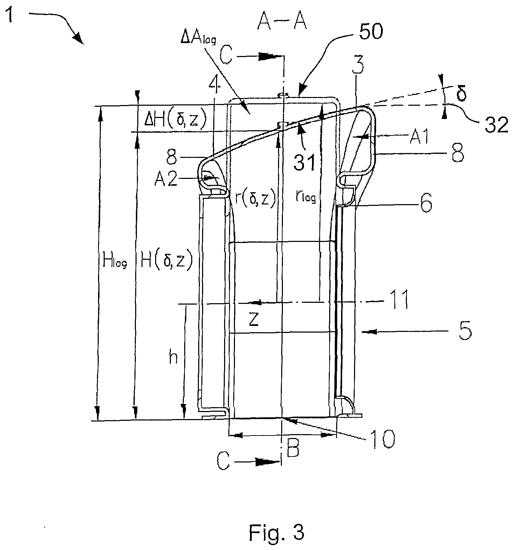

Das Halbspiralgehäuse 1 weist im Mittelabschnitt 8 seine Maximalhöhe H auf, erstreckt sich dort jedoch nicht entlang dem logarithmischen Spiralradius $r_{log}$, sondern weist einen reduzierten gemittelten Halbspiralgehäuseradius auf und ist mithin in radialer Richtung kleiner ausgebildet. In der gezeigten Ausführung ist dies am deutlichsten in der Schnittansicht gemäß Figur 3 zu erkennen, wobei die Verkleinerung des gemittelten Halbspiralgehäuseradius durch die gegenüber der zur Rotationsachse 11 parallel verlaufenden Axialebene 32 um den Winkel $\delta = 7°$geneigte radiale Druckraumwand 31 erreicht wird. Der tatsächliche Halbspiralgehäuseradius $r(\delta,z)$ ist abhängig von der Axialposition z sowie dem Winkel $\delta$ und verringert sich in Axialrichtung von der Außenwand des Seitenteils 3 in Richtung der Außenwand des Seitenteils 4. Die Maximalhöhe $H(\delta,z)$ des Halbspiralgehäuses 1 ist gegenüber dem herkömmlichen Halbspiralgehäuse mit dem logarithmischen Spiralradius $r_{log}$ und einer Maximalhöhe Hlog um den Wert $\Delta H(\delta,z)$ verringert. Es ergibt sich dabei eine Verkleinerung der Strömungsquerschnittsfläche von $\Delta Alog$. Die Maximalhöhe $H(\delta,z)$ ist berechenbar als

$$H(\delta,z) = Hlog - \Delta H(\delta,z) = Hlog - (r_{log} - r(\delta,z)) = h + r(\delta,z),$$

wobei h den lotrechten Abstand von der Rotationsachse 11 zur Ausblasfläche 10 bestimmt. Figur 3 zeigt die Schnittansicht A-A aus Figur 2 und mithin die Strömungsquerschnittsfläche im Mittelabschnitt 8 innerhalb des Winkelbereichs $\beta$ mit dem Verlauf des Halbspiralgehäuseradius $r(\delta,z)$ durch die beiden Seitenteile 3, 4. Die beiden Flächen A1 und A2 bilden eine Axialverbreiterung des Druckraums im Mittelabschnitt 8 gegenüber Außenwandflächen der Seitenteile 3, 4 mit der Breite B, welche die Verkleinerung der Strömungsquerschnittsfläche $\Delta Alog$ ausgleichen, so dass gilt $\Delta Alog = A1 + A2$. Der radial äußerste Bereich des Druckraums im Mittelabschnitt 8 weist mithin im Radialschnitt gemäß Fig. 3 eine im Wesentlichen dreieckige Form mit gerundeten Ecken auf.

In den Figuren 3 und 4 sind in gestrichelter Linie jeweils als Vergleich der Verlauf auch des Mittelabschnitts entlang dem logarithmischen Spiralradius $r_{log}$ eingezeichnet, woraus sich die herkömmliche Halbspiralgehäuseform 50 (nicht Teil der Erfindung) ergibt, die jedoch eine deutlich größere Maximalhöhe Hlog bedingt.

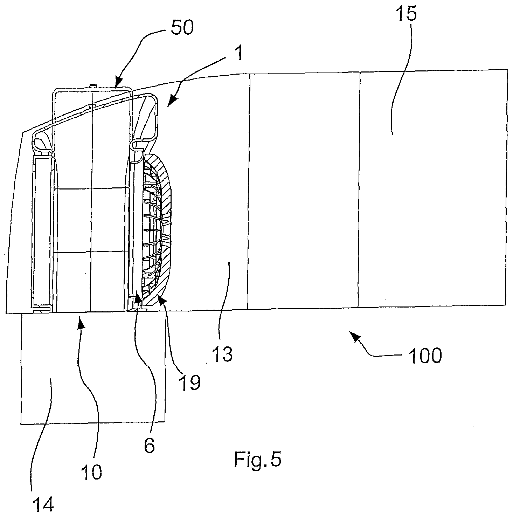

Figur 5 zeigt eine Einbausituation des Halbspiralgehäuses 1 aus Fig. 1 in eine Aufdachklimaanlage 100, insbesondere in einen Randabschnitt einer Verdampfereinheit 13 mit herkömmlicher gerundeter Querschnittsform und demzufolge am Außenrand beschränktem Raumangebot. Das Halbspiralgehäuse 1 ist analog zur Schnittansicht gemäß Fig. 3 gezeigt. Die herkömmliche Halbspiralgehäuseform 50 (nicht Teil der Erfindung) passt nicht in eine derartige Verdampfereinheit 13, wie es anhand der gestrichelten Linie dargestellt ist. Durch die Anpassung des Mittelabschnitts 8 gelingt es, mit dem Halbspiralgehäuse 1 innerhalb der Außenkontur der Verdampfereinheit 13 zu bleiben. Zudem zeigt das Ausführungsbeispiel zusätzlich die Anordnung des konvex geformten Vorleitgitters 19 an der Einlaufdüse 6 zur vorstehend beschriebenen Beeinflussung der Zuströmung. An die Verdampfereinheit 13 schließt sich ein Wärmetauscher 15 an. An die Ausblasfläche 10 des Halbspiralgehäuses 1 schließt sich ein Kanal 14 an, in den der Radialventilator (nicht gezeigt) ausbläst.

**Patentansprüche**

1. Halbspiralgehäuse eines Radialventilators mit einer Erstreckung über 180° einer logarithmischen Spirale und mit einem sich in Umfangsrichtung um eine axiale Ansaugöffnung (5) zu einer radialen Ausblasöffnung (33) erstreckenden Druckraum, der in Umfangsrichtung gesehen zumindest in einen Anfangsabschnitt (7), einen Mittelabschnitt (8) und einen Ausblasabschnitt unterteilt ist, wobei die Ansaugöffnung (5) eine zentrale Rotationsachse für ein Ventilatorrad bestimmt, und wobei ein gemittelter Halbspiralgehäuseradius, um die Rotationsachse (11) gesehen, im Anfangsabschnitt (7), Mittelabschnitt (8) und Ausblasabschnitt (9) variiert und im Ausblasabschnitt sein Maximum aufweist, wobei im Mittelabschnitt (8) der Halbspiralgehäuseradius in einem in radialer Richtung eine Maximalhöhe $H(\delta,z)$ des Halbspiralgehäuses (1) bestimmenden Bereich gegenüber einem logarithmischen Spiralradius ($r_{log}$) verkleinert ist, **dadurch gekennzeichnet, dass** sich eine Radialerstreckung des Druckraums im die Maximalhöhe $H(\delta,z)$ des Halbspiralgehäuses (1) bestimmenden Bereich des Mittelabschnitts (8) von einer ersten Axialseite des Halbspiralgehäuses (1) zu einer gegenüberliegenden zweiten Axialseite des Halbspiralgehäuses (1) verkleinert.

2. Halbspiralgehäuse nach Anspruch 1, **dadurch gekennzeichnet, dass** es eine Axialverbreiterung (A1, A2) des Druckraums in Richtung der Rotationsachse (11) zumindest im Mittelabschnitt (8) aufweist, wobei die Axialverbreiterung (A1, A2) eine Strömungsquerschnittsfläche des Druckraums um einen Wert vergrößert, der zumindest einem Wert entspricht, um den die Strömungsquerschnittsfläche des Druckraums durch die Verkleinerung des Mittelabschnitts (8) gegenüber dem logarithmischen Spiralradius ($r_{log}$) reduziert ist.

3. Halbspiralgehäuse nach Anspruch 1 oder 2, **dadurch gekennzeichnet, dass** der Halbspiralgehäuseradius zumindest an einem Übergang in Umfangsrichtung zwischen dem Anfangsabschnitt (7) und dem Mittelabschnitt (8) sowie dem Mittelabschnitt (8) und dem Ausblasabschnitt (9) dem logarithmischen Spiralradius ($r_{log}$) entspricht.

4. Halbspiralgehäuse nach einem der vorigen Ansprüche, **dadurch gekennzeichnet, dass** sich der Halbspiralgehäuseradius im Mittelabschnitt (8) des Druckraums des Halbspiralgehäuses (1) in eine axiale Richtung (z) in Richtung der Rotationsachse (11) verringert.

5. Halbspiralgehäuse nach einem der vorigen Ansprüche, **dadurch gekennzeichnet, dass** eine radiale Druckraumwand (31) in einem Winkelbereich $\delta=1°-20°$, insbesondere $\delta=3°-12°$, geneigt gegenüber der Rotationsachse (11) bzw. gegenüber einer zur Rotationsachse parallel verlaufenden Axialebene (32) verläuft.

6. Halbspiralgehäuse nach einem der vorigen Ansprüche, **dadurch gekennzeichnet, dass** sich in Umfangsrichtung gesehen der Anfangsabschnitt (7) über einen Winkelbereich von $\alpha=20°-110°$, insbesondere von $\alpha=40°-75°$, und der Mittelabschnitt (8) über einen Winkelbereich von $\beta=30°-200°$, insbesondere von $\beta=120°-160°$ erstrecken.

7. Halbspiralgehäuse nach einem der vorigen Ansprüche, **dadurch gekennzeichnet, dass** der Anfangsabschnitt (7) und der Ausblasabschnitt (9) eine Erstreckung in Umfangsrichtung entlang dem logarithmischen Spiralradius ($r_{log}$) aufweisen.

8. Halbspiralgehäuse nach dem vorigen Anspruch, **dadurch gekennzeichnet, dass** in Umfangsrichtung gesehene Übergänge zwischen dem Anfangsabschnitt (7) und dem Mittelabschnitt (8) sowie dem Mittelabschnitt (8) und dem Ausblasabschnitt (9) tangential verlaufen.

9. Halbspiralgehäuse nach einem der vorigen Ansprüche, **dadurch gekennzeichnet, dass** es aus zwei axialen Seitenteilen (3, 4) gebildet ist.

10. Halbspiralgehäuse nach dem vorigen Anspruch, **dadurch gekennzeichnet, dass** eines der zwei Seitenteile (3, 4) im Mittelabschnitt (8) in eine Axialrichtung gegenüber dem logarithmischen Spiralradius ($r_{log}$) stärker verkleinert ist als das zweite Seitenteil (3, 4)

11. Halbspiralgehäuse nach einem der vorigen Ansprüche, **dadurch gekennzeichnet, dass** die Ansaugöffnung (5) eine sich parallel zur Rotationsachse (11) erstreckende Einlaufdüse (6) aufweist, deren Strömungsquerschnitt sich über ihren Axialverlauf verringert.

12. Halbspiralgehäuse nach einem der vorigen Ansprüche, **dadurch gekennzeichnet, dass** eine Strömungsquerschnittsfläche im Anfangsabschnitt (7) und Ausblasabschnitt (9) des Druckraums oval, elliptisch, rechteckig oder rechteckig mit verrundeten Ecken ausgebildet ist.

13. Halbspiralgehäuse nach einem der vorigen Ansprüche, **dadurch gekennzeichnet, dass** eine Ausblasfläche (10) des Halbspiralgehäuses (1) durch den Ausblasabschnitt (9) gebildet wird und rechteckig oder rechteckig mit verrundeten Ecken ausgebildet ist.

14. Halbspiralgehäuse nach einem der vorigen Ansprüche 11 bis 13, **dadurch gekennzeichnet, dass** an der Ansaugöffnung (5) oder der Einlaufdüse (6) ein konvex geformtes Vorleitgitter (19) angeordnet ist.

## Claims

1. A half-spiral housing of a radial fan with an extension over 180° of a logarithmic spiral and with a pressure chamber extending in the circumferential direction around an axial intake opening (5) to a radial exhaust opening (33), which pressure chamber, as viewed in the circumferential direction, is subdivided into at least one initial portion (7), one middle portion (8), and one exhaust portion, wherein the intake opening (5) defines a central axis of rotation for a fan wheel, and wherein an average half-spiral housing radius, as viewed around the axis of rotation (11), varies in the initial portion (7), middle portion (8), and exhaust portion (9) and reaches its maximum in the exhaust portion, the half-spiral housing radius in the middle portion (8) being reduced in a region that defines a maximum height H($\delta$,

z) of the half-spiral housing (1) in the radial direction relative to a logarithmic spiral radius ($r_{log}$), **characterized in that** a radial extension of the pressure chamber in the region of the middle portion (8) that defines the maximum height H($\delta$,z) of the half-spiral housing (1) is reduced from a first axial side of the half-spiral housing (1) to an oppositely situated second axial side of the half-spiral housing (1).

2. The half-spiral housing as set forth in claim 1, **characterized in that** it has an axial widening (A1, A2) of the pressure chamber toward the axis of rotation (11) at least in the middle portion (8), the axial widening (A1, A2) increasing a flow cross-sectional area of the pressure chamber by a value that corresponds at least to a value by which the flow cross-sectional area of the pressure chamber is reduced as a result of the reduction of the middle portion (8) relative to the logarithmic spiral radius ($r_{log}$).

3. The half-spiral housing as set forth in claim 1 or 2, **characterized in that**, at least at a transition in the circumferential direction between the initial portion (7) and the middle portion (8) and between the middle portion (8) and the exhaust portion (9), the half-spiral housing radius corresponds to the logarithmic spiral radius ($r_{log}$).

4. The half-spiral housing as set forth in one of the preceding claims, **characterized in that**, in the middle portion (8) of the pressure chamber of the half-spiral housing (1), the half-spiral housing radius decreases in an axial direction (z) toward the axis of rotation (11).

5. The half-spiral housing as set forth in one of the preceding claims, **characterized in that** a radial pressure chamber wall (31) extends so as to be inclined in an angular range of $\delta$=1°-20°, particularly $\delta$=3°-12°, relative to the axis of rotation (11) or relative to an axial plane (32) that is parallel to the axis of rotation.

6. The half-spiral housing as set forth in one of the preceding claims, **characterized in that**, as viewed in the circumferential direction, the initial portion (7) extends over an angular range of $\alpha$=20°-110°, particularly $\alpha$=40°-75°, and the middle portion (8) extends over an angular range of $\beta$=30°-200°, particularly $\beta$=120°-160°.

7. The half-spiral housing as set forth in one of the preceding claims, **characterized in that** the initial portion (7) and the exhaust portion (9) extend in the circumferential direction along the logarithmic spiral radius ($r_{log}$).

8. The half-spiral housing as set forth in the preceding claim, **characterized in that**, as viewed in the circumferential direction, transitions between the initial portion (7) and the middle portion (8) and between the middle portion (8) and the exhaust portion (9) extend tangentially.

9. The half-spiral housing as set forth in one of the preceding claims, **characterized in that** it is formed from two axial side parts (3, 4).

10. The half-spiral housing as set forth in the previous claim, **characterized in that** one of the two side parts (3, 4) in the middle portion (8) is more reduced in an axial direction relative to the logarithmic spiral radius ($r_{log}$) than the second side part (3, 4).

11. The half-spiral housing as set forth in one of the preceding claims, **characterized in that** the intake opening (5) has an intake nozzle (6) which extends parallel to the axis of rotation (11) and whose flow cross section decreases over its axial course.

12. The half-spiral housing as set forth in one of the preceding claims, **characterized in that** a flow cross-sectional area in the initial portion (7) and exhaust portion (9) of the pressure chamber is oval-shaped, elliptical, rectangular, or rectangular with rounded corners.

13. The half-spiral housing as set forth in one of the preceding claims, **characterized in that** an exhaust surface (10) of the half-spiral housing (1) is formed by the exhaust portion (9) and is rectangular or rectangular with rounded corners.

14. The half-spiral housing as set forth in one of claims 11 to 13, **characterized in that** a convexly shaped protective screen (19) is arranged at the intake opening (5) or the intake nozzle (6).

**Revendications**

1.  Carter semi-hélicoïdal d'un ventilateur radial comprenant une étendue sur 180° d'une spirale logarithmique et une chambre de pression s'étendant dans la direction circonférentielle autour d'une ouverture d'aspiration axiale (5) vers une ouverture de soufflage radiale (33) et qui, vue dans la direction circonférentielle, est divisée en au moins une section initiale (7), une section intermédiaire (8) et une section de soufflage, l'ouverture d'aspiration (5) déterminant un axe de rotation central pour une roue de ventilateur, et un rayon moyenné du carter semi-hélicoïdal, vu autour de l'axe de rotation (11), variant dans la section initiale (7), la section intermédiaire (8) et la section de soufflage (9) et présentant son maximum dans la section de soufflage, dans lequel, dans la section intermédiaire (8), le rayon de carter semi-hélicoïdal est réduit par rapport au rayon de spirale logarithmique ($r_{log}$) dans une zone déterminant une hauteur maximale $H(\delta,z)$ du carter semi-hélicoïdal (1) dans la direction radiale, **caractérisé en ce qu'**une étendue radiale de la chambre de pression dans la zone, déterminant la hauteur maximale $H(\delta,z)$ du carter semi-hélicoïdal (1), de la section intermédiaire (8) diminue d'un premier côté axial du carter semi-hélicoïdal (1) vers un deuxième côté axial opposé du carter semi-hélicoïdal (1).

2.  Carter semi-hélicoïdal selon la revendication 1, **caractérisé en ce qu'**il présente un élargissement axial (A1, A2) de la chambre de pression en direction de l'axe de rotation (11) au moins dans la section intermédiaire (8), l'élargissement axial (A1, A2) augmentant une section transversale d'écoulement de la chambre de pression d'une valeur qui correspond au moins à une valeur dont la section transversale d'écoulement de la chambre de pression est réduite par la diminution de la section intermédiaire (8) par rapport au rayon de spirale logarithmique ($r_{log}$).

3.  Carter semi-hélicoïdal selon la revendication 1 ou 2, **caractérisé en ce que** le rayon de carter semi-hélicoïdal correspond au rayon de spirale logarithmique ($r_{log}$) au moins à une transition dans la direction circonférentielle entre la section initiale (7) et la section intermédiaire (8) ainsi qu'entre la section intermédiaire (8) et la section de soufflage (9).

4.  Carter semi-hélicoïdal selon l'une quelconque des revendications précédentes, **caractérisé en ce que** le rayon de carter semi-hélicoïdal diminue dans la section intermédiaire (8) de la chambre de pression du carter semi-hélicoïdal (1) dans une direction axiale (z) en direction de l'axe de rotation (11).

5.  Carter semi-hélicoïdal selon l'une quelconque des revendications précédentes, **caractérisé en ce qu'**une paroi de chambre de pression radiale (31) s'étend dans une plage angulaire de $\delta$ = 1° à 20°, en particulier de $\delta$ = 3° à 12°, de manière inclinée par rapport à l'axe de rotation (11) ou par rapport à un plan axial (32) s'étendant en parallèle à l'axe de rotation.

6.  Carter semi-hélicoïdal selon l'une quelconque des revendications précédentes, **caractérisé en ce que**, vue dans la direction circonférentielle, la section initiale (7) s'étend sur une plage angulaire de $\alpha$ = 20° à 110°, en particulier de $\alpha$ = 40° à 75°, et la section intermédiaire (8) s'étend sur une plage angulaire de $\beta$ = 30° à 200°, en particulier de $\beta$ = 120° à 160°.

7.  Carter semi-hélicoïdal selon l'une quelconque des revendications précédentes, **caractérisé en ce que** la section initiale (7) et la section de soufflage (9) présentent une étendue dans la direction circonférentielle le long de la section de spirale logarithmique ($r_{log}$).

8.  Carter semi-hélicoïdal selon la revendication précédente, **caractérisé en ce que** vues dans la direction circonférentielle, des transitions entre la section initiale (7) et la section intermédiaire (8) ainsi qu'entre la section intermédiaire (8) et la section de soufflage (9) s'étendent de manière tangentielle.

9.  Carter semi-hélicoïdal selon l'une quelconque des revendications précédentes, **caractérisé en ce qu'**il est formé à partir de deux parties latérales axiales (3, 4).

10. Carter semi-hélicoïdal selon la revendication précédente, **caractérisé en ce que** l'une des deux parties latérales (3, 4) est diminuée plus que la deuxième partie latérale (3, 4), dans la section intermédiaire (8) dans une direction axiale par rapport à la section de spirale logarithmique ($r_{log}$).

11. Carter semi-hélicoïdal selon l'une quelconque des revendications précédentes, **caractérisé en ce que** l'ouverture d'aspiration (5) présente une buse d'admission (6) s'étendant en parallèle à l'axe de rotation (11) et dont la section transversale d'écoulement diminue sur son contour axial.

**12.** Carter semi-hélicoïdal selon l'une quelconque des revendications précédentes, **caractérisé en ce qu'**une section transversale d'écoulement dans la section initiale (7) et la section de soufflage (9) de la chambre de pression est réalisée de manière ovale, elliptique, rectangulaire ou rectangulaire à coins arrondis.

**13.** Carter semi-hélicoïdal selon l'une quelconque des revendications précédentes, **caractérisé en ce qu'**une surface de soufflage (10) du carter semi-hélicoïdal (1) est formée par la section de soufflage (9) et est réalisée de manière rectangulaire ou rectangulaire à coins arrondis.

**14.** Carter semi-hélicoïdal selon l'une quelconque des revendications précédentes 11 à 13, **caractérisé en ce qu'**une grille directrice (19) de forme convexe est disposée au niveau de l'ouverture d'aspiration (5) ou de la buse d'admission (6).

Fig. 1

Fig. 2

1

$\Delta A_{log}$
A—A
50
$\Delta H(\delta,z)$
C
4
3
$\delta$
32
8
A1
8
A2
31
6
$r(\delta,z)$
$r_{log}$
11
$H_{log}$ $H(\delta,z)$
z
5
h
10
B
C

Fig. 3

Fig. 4

50

1

15

13

19

6

10

14

100

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 106627040 A
- DE 102009033776 A1
- DE 102009031552 A1
- WO 2017071880 A1